Europäisches Patentamt

European Patent Office

Office européen des brevets

(19)

(11) Veröffentlichungsnummer: **0 467 021 A1**

## EUROPÄISCHE PATENTANMELDUNG

(12)

(21) Anmeldenummer: **91106088.7**

(22) Anmeldetag: **17.04.91**

(51) Int. Cl.⁵: **B60T 11/20**

(30) Priorität: **09.06.90 DE 4018494**

(43) Veröffentlichungstag der Anmeldung:
**22.01.92 Patentblatt 92/04**

(84) Benannte Vertragsstaaten:
**DE FR GB IT**

(71) Anmelder: **ALFRED TEVES GMBH**
**Guerickestrasse 7**
**W-6000 Frankfurt/Main 90(DE)**

(72) Erfinder: **Hartmann, Willi**
**Modanstrasse 15**
**W-6086 Riedstadt 3(DE)**

(54) **Verfahren für die Einstellung einer Kolbenzylinderanordnung.**

(57) Die Erfindung betrifft ein Verfahren für die Einstellung der Ventilschließwege einer Kolbenzylinderanordnung, wobei in einer Zylinderbohrung (3) hintereinander zwei aneinander gefesselte Kolben (4,5) angeordnet sind. Die Fesselungsschraube (29) ist in einen der Kolben (4,5) eingeschraubt. Um die Schließwege beider Ventile - Zentralventil (41,42) oder Kombinationsventil aus Manschettendichtung (12,22) und Ausgleichsbohrung (13,23) - einstellen zu können, wird nach dem Montieren aller Innenteile und Schließen des ersten Ventils (41 bzw. 22,23) die aktive Länge der Fesselungsschraube (29) und damit der Abstand zwischen den beiden Kolben (4,5), durch Drehung des ersten Kolbens (4) solange verändert, bis das zweite Ventil (42 bzw. 13,23) seinen Schließzustand ändert. Nachdem beide Kolben (4,5) um den Ventilschließweg zurückgezogen wurden, wird der Abstand zwischen einer Anschlagfläche (40) am Zylindergehäuse (2) und dem Angriffspunkt (39) einer Betätigungsstange durch Einlegen von Distanzscheiben (37) und einem Druckstück (38) eingestellt. Das erfindungsgemäße Verfahren sichert sehr kleine Ventilschließwege in beiden Kreisen und ist gleichermaßen anwendbar für Anordnungen mit Zentralventilen (41,42) und Manschettendichtungen (12,22) mit Ausgleichsbohrungen (13,23).

Fig. 1

EP 0 467 021 A1

Die Erfindung betrifft ein Verfahren für die Einstellung einer Kolbenzylinderanordnung, wie im Oberbegriff des Anspruchs 1 beschrieben ist. Eine solche Kolbenzylinderanordnung ist aus der DE-OS 37 36 057 bekannt. Bisher wurden derartige Anordnungen, die häufig als Hauptzylinder in Bremsanlagen von Kraftfahrzeugen verwendet werden, so zusammengebaut und eingestellt, daß der Abstand der beiden Kolben zunächst auf einen Sollabstand eingestellt wurde, beide Kolben in das Zylindergehäuse eingeschoben und gesichert wurden und zuletzt nur das Ventil, welches dem Druckstangenkolben zugeordnet ist, durch Einlegen von Distanzstücken zwischen Druckstangenkolben und Betätigungsstange schließwegoptimiert wurde.

Diese Vorgehensweise hat zur Folge, daß der Ventilschließweg des Ventils im Schwimmkolben von vielen Toleranzen abhängt und es dadurch zu Beginn eines Bremsvorgangs zu stark unterschiedlichen Drücken in beiden Bremskreisen kommen kann.

Die Erfindung hat sich daher die Aufgabe gestellt, ein Verfahren für die Einstellung einer Kolbenzylinderanordnung anzugeben, welches eine einfache und exakte Einstellung kleiner Ventilschließwege in beiden Kreisen ermöglicht und das zudem sowohl für Anordnungen mit Zentralventilen als auch mit als Ausgleichsbohrung im Zylindergehäuse und Dichtung am zugeordneten Kolben ausgeführten Ventilen verwendbar ist.

Die Aufgabe wird durch die im kennzeichnenden Teil des Anspruchs 1 angegebenen Verfahrensschritte gelöst. Die Unteransprüche beschreiben vorteilhafte Weiterbildungen und werden im folgenden anhand zweier mit dem erfindungsgemäßen Verfahren zusammengebauter Kolbenzylinderanordnungen erläutert. Zwei derartige Hauptzylinder sind in den beiliegenden Zeichnungen dargestellt.

Es zeigt

Fig. 1     einen Tandemhauptzylinder mit zwei Ausgleichsbohrungen im Axialschnitt und

Fig. 2     einen Tandemhauptzylinder mit zwei Zentalventilen im Axialschnitt.

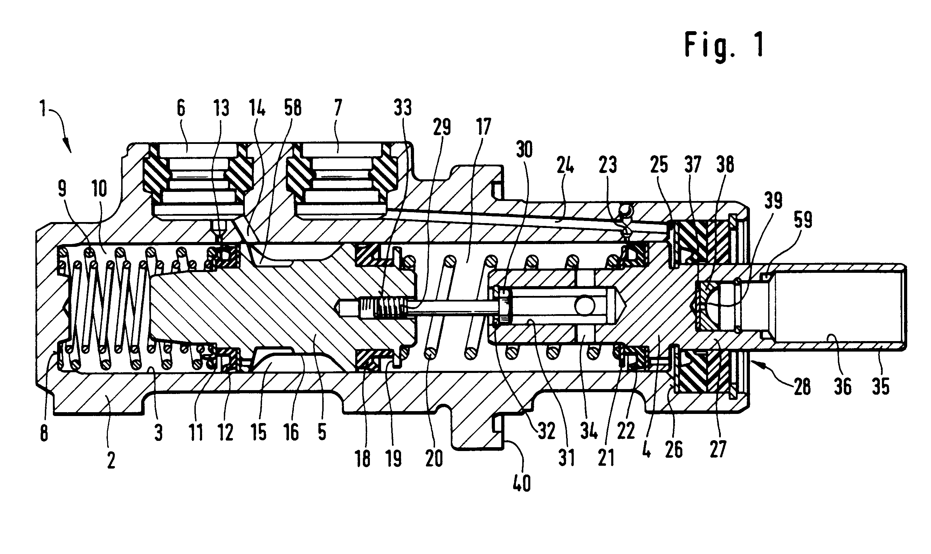

In Fig. 1 sieht man einen Tandemhauptzylinder 1, der aus einem Zylindergehäuse 2 mit einer Zylinderbohrung 3, in der ein erster, Druckstangenkolben 4 und ein zweiter, Schwimmkolben 5 abgedichtet axial verschiebbar geführt sind, und zwei Anschlüssen 6,7 für einen nicht dargestellten Ausgleichsbehälter besteht. Am Boden 8 der Zylinderbohrung 3 stützt sich eine zweite Rückstellfeder 9, die den Schwimmkolben 5 in Richtung des offenen Zylinderbohrungsendes vorspannt, ab. Sie ist im zweiten Druckraum 10 angeordnet. Der Schwimmkolben 5 weist einen radialen Bund 11 auf, an dem sich die Rückstellfeder 9 abstützt und durch den eine Manschettendichtung 12 am Kolben 5 fixiert ist. Diese Manschettendichtung 12 bildet zusammen mit einer Ausgleichsbohrung 13 im Zylindergehäuse 2 das dem Schwimmkolben 5 zugeordnete Ventil, welches, je nach Position des Kolbens 5 die Verbindung vom Ausgleichsbehälter über den Anschluß 6 und die Ausgleichsbohrung 13 zum Druckraum 10 freigibt oder verschließt. Vom Anschluß 6 führt eine Nachlaufbohrung 14 in einen Ringraum 15, welcher von einer ringförmigen Ausnehmung 16 im Kolben 5 und dem Zylindergehäuse 2 gebildet wird. Dieser Ringraum 15 ist ständig mit dem Ausgleichsbehälter verbunden und daher drucklos. Gegenüber dem ersten Druckraum 16 ist er durch eine zweite Manschettendichtung 18, die in einer Ringnut 19 des zweiten Kolbens 5 angeordnet ist, abgedichtet.

Am dem ersten Druckraum 17 zugewandten Ende des Schwimmkolbens 5 stützt sich ein Ende einer ersten Rückstellfeder 20 ab, deren anderes Ende sich an einem radialen Bund 21 des Druckstangenkolbens 4 abstützt. Auch durch den radialen Bund 21 wird eine Manschettendichtung 22 auf dem Kolben 4 gesichert, die in gleicher Weise, wie oben beschrieben, mit einer Ausgleichsbohrung 23, welche über einen Kanal 24 mit dem Anschluß 7 verbunden ist, als Ventil des Druckstangenkolbens 4 zusammenwirkt. Der Kanal 24 führt außerdem in einen Ringraum 25, welcher von einer Stufe 26 der Zylinderbohrung 3, einer Verjüngung 27 des Druckstangenkolbens 4 und einem Dicht- und Sicherungspaket 28 gebildet wird und der als Nachlaufraum funktioniert. Das Dicht- und Sicherungspaket 28 verschließt die Zylinderbohrung 3 nach außen.

Die beiden Kolben 4,5 sind durch eine Fesselungsschraube 29, die auch die erste Rückstellfeder 20 vorspannt, aneinander gefesselt. Ein Ende 30 der Fesselungsschraube 29 ist in einer axialen Ausnehmung 31 des ersten Kolbens 4 durch einen Ring 32 gesichert und in ihr axial verschiebbar, wobei der Ring 32 als Begrenzung dient. Im Schwimmkolben 5 ist die Fesselungsschraube 29 in ein Gegengewinde 33 eingeschraubt. Das Ende 30 ist ebenso wie die axiale Ausnehmung 31 als Sechskant ausgebildet. Dadurch folgt die Fesselungsschraube 29 jeder Drehbewegung des Druckstangenkolbens 4 und kann durch Drehen des Kolbens 4 in das Gegengewinde 33 eingeschraubt werden. Außer einem Sechskant sind auch andere nicht rotationssymmetrische Formen, wie beispielsweise ein Vierkant oder Oval für die Ausformung des Kopfes bzw. der axialen Ausnehmung denkbar. Die axiale Ausnehmung 31 ist außerdem durch eine radiale Bohrung 34 mit dem ersten Druckraum 17 verbunden, so daß bei axialer Verschiebung des Endes 30 in der Ausnehmung 31 die verdrängte Bremsflüssigkeit in den ersten Druckraum 17 entweichen kann.

In gleicher Weise ist es möglich, die axiale Ausnehmung im Schwimmkolben 5 vorzusehen und das Gegengewinde im Druckstangenkolben 4 anzuordnen. In diesem Fall kann auch durch Drehen des Druckkolbens 4 und Sichern des Schwimmkolbens 5 gegen Verdrehen der axiale Abstand zwischen beiden Kolben 4,5 verändert werden.

Das verjüngte, durch das Dicht- und Sicherungspaket 28 hindurch aus dem Zylindergehäuse 2 hervorragende Ende 35 des Kolbens 4 weist eine zweite axiale Ausnehmung 36 auf, in die Distanzscheiben 37 und ein Druckstück 38 eingelegt sind, so daß der Angriffspunkt 39 einer nicht gezeigten Betätigungsstange, beispielsweise eines Bremskraftverstärkers oder Pedalgestänges sich in einer in bezug auf das Zylindergehäuse 2 definierten Position befindet. Besonders einfach ist es, die Anschlagfläche 40 als Bezugspunkt am Zylindergehäuse zu verwenden, mit der der Tandemhauptzylinder an einem Bremskraftverstärker oder der Spritzwand anliegt.

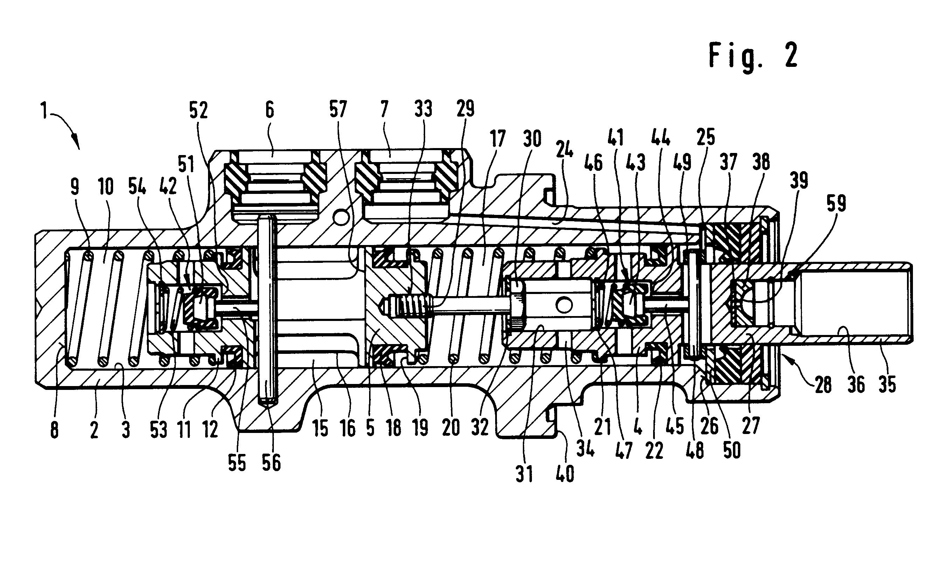

Der in Fig. 2 dargestellte Tandemhauptzylinder 1 unterscheidet sich nur im Ventilmechanismus von dem oben Beschriebenen. Alle gleichen Teile sind daher auch mit den gleichen Bezugszeichen wie in Fig. 1 versehen und es werden nur die beiden Zentralventile 41,42 im folgenden erläutert.

Das erste Zentralventil 41 ist im Kolben 4 angeordnet und besteht aus einem Ventilkörper 43, einem in den ersten Kolben 4 integrierten Ventilsitz 44, einem Fortsatz 45 zum Öffnen, einer Zentralventilfeder 46, die sich an einem Vorsprung 47 des Kolbens 4 abstützt und den Ventilkörper 43 in Schließrichtung vorspannt, und einem als Anschlag dienenden Stift 48. Der Stift 48 ist in einem Ring 49 gehalten. In der Bremslösestellung liegt der Ring 49 an der Scheibe 50, die fest mit dem Zylindergehäuse 2 verbunden ist, an. Am Stift 48 liegt der Fortsatz 45 an und hebt den Ventilkörper 43 vom Ventilsitz 44 ab, so daß die Verbindung zwischen erstem Druckraum 17 und Ringraum 25 geöffnet und der Druckraum dadurch drucklos ist. Bei Betätigung hebt der Ring 49 von der Scheibe 50 ab und die Zentralventilfeder 46 verschiebt den Ventilkörper 43 gegen den Ventilsitz 44. Im Druckraum 17 kann Druck aufgebaut werden.

Das zweite Zentralventil 42, das im Schwimmkolben 5 angeordnet ist, funktioniert ebenso. Es besteht aus dem Ventilkörper 51, dem Ventilsitz 52, der Zentralventilfeder 53, die sich an einem als Vorsprung wirkenden Sprengring 54 abstützt, dem Fortsatz 55 sowie dem gehäusefesten Stift 56, der durch eine axiale Ausnehmung 57 im zweiten Kolben 5 hindurchgreift. Der Stift 56 ist parallel zur nicht erkennbaren Nachlaufbohrung (14 in Fig. 1) angeordnet.

Der Zusammenbau der beiden beschriebenen Kolbenzylinderanordnungen erfolgt fast gleich. Deswegen wird er für beide gemeinsam beschrieben und die Unterschiede werden im einzelnen angegeben. Zuerst werden alle Manschettendichtungen 12,18,22 auf die Kolben aufgeschoben und ggf. mit den radialen Bünden 11 und 21 gesichert. Anschließend werden - falls vorgesehen - die Zentralventile 41,42 vollständig in den beiden Kolben 4,5 montiert. Als nächstes wird das Ende 30 der Fesselungsschraube 29 in der axialen Ausnehmung 31 gesichert, dann die erste Rückstellfeder 20 aufgeschoben und die Fesselungsschraube 29 in das Gegengewinde 33 im zweiten Kolben 5 eingeschraubt. Nachdem die zweite Rückstellfeder 5 in die Zylinderbohrung eingesetzt wurde, werden die miteinander verbundenen Kolben 4,5 ebenfalls eingesetzt und durch Verschließen der Zylinderbohrung 3 mit dem Dichtund Sicherungspaket 28 gesichert. Falls im Schwimmkolben 5 ein Zentralventil 42 vorhanden ist, wird nun der Stift 56 montiert.

Im nächsten Schritt werden dann die Kolben 4,5 soweit in Betätigungsrichtung vorgeschoben, bis das erste Ventil schließt. Dies ist besonders einfach an einer Druckänderung erkennbar, wenn die Druckräume mit Druckluft beaufschlagt werden. Bei Verwendung eines Ventils wie in Fig. 1, gewährleistet die Druckluft im zweiten Druckraum 10 auch, daß die Manschettendichtung 12 an der Zylinderbohrung 3 anliegt.

Nun wird der Druckstangenkolben 4 axial in seiner Position festgehalten und der Schwimmkolben 5 gegen Verdrehen gesichert. Als Verdrehsicherung kann in besonders einfacher Weise - bei Ausführung gemäß Fig. 2 - der Stift 56 dienen. Zu diesem Zweck ist die axiale Ausnehmung 57 als Schlitz ausgeführt. Wird ein Tandemhauptzylinder mit Ausgleichsbohrungen 13,23 und Manschettendichtungen 12,22 wie in Fig. 1 zusammengebaut, so kann durch die Nachlaufbohrung 14 ein Arretierungsstift hindurchgeführt werden, der in eine in den Schwimmkolben 5 eingefräste Nut 58 eingreift und den Kolben 5 so gegen Verdrehen sichert. Nun wird überprüft, ob das zweite Ventil 12,13 bzw. 42 offen oder geschlossen ist. Bei drehsicher gehaltenem zweitem Kolben 5 wird der erste Kolben 4 gedreht, so daß sich das Fesselelement 29 in das Gegengewinde 33 hinein- bzw. herausschraubt, die erste Rückstellfeder 20 zusammengedrückt oder entspannt und der Schwimmkolben 5 axial verschoben wird. Um den Druckstangenkolben 4 leicht drehen zu können, ist im Bereich der zweiten axialen Ausnehmung 36 eine Kerbe 59 vorgesehen, in die ein Werkzeug wie in eine Schlitzschraube eingreifen kann.

Der Druckstangenkolben 4 wird so lange gedreht, bis der Schwimmkolben 5 so weit verschoben ist, daß das zweite Ventil seinen Schließzustand ändert, d.h. öffnet, wenn es zuvor geschlossen war und umgekehrt. Auch dies ist an einer Druckänderung im Druckraum 10 erkennbar, wenn er mit Druckluft beaufschlagt wurde. Als nächstes wird das Gewinde von Fesselelement 29 und zweitem Kolben 5 gesichert. Diese Sicherung ergibt sich automatisch, wenn das Gegengewinde 33 vor dem Zusammenbau z.B. mit Tuf-Lok beschichtet oder nur unvollständig ausgeschnitten wurde. Nach dem Sichern des Gewindes gegen weiteres unbeabsichtigtes Verdrehen wird - falls vorhanden - der Arretierungsstift aus der Nachlaufbohrung 14 entfernt und beide Kolben 4,5 werden um einen vorbestimmten Ventilschließweg zurückgezogen. Anschließend wird noch die Position des Druckstangenkolbens 4 bezüglich des Zylindergehäuses 2 bestimmt, indem etwa der Abstand zwischen der Anschlagfläche 40 und dem Boden der zweiten axialen Ausnehmung 36 ermittelt wird. Zuletzt wird durch Einlegen von Distanzscheiben 37 und einem Druckstück 38 der Abstand zwischen der Anschlagfläche 40 (Bezugspunkt am Zylindergehäuse 2) und dem Angriffspunkt 39 einer Betätigungsstange eingestellt.

Bezugszeichenliste

| 1 | Tandemhauptzylinder |
| 2 | Zylindergehäuse |
| 3 | Zylinderbohrung |
| 4 | Druckstangenkolben, erster Kolben |
| 5 | Schwimmkolben, zweiter Kolben |
| 6 | Anschluß |
| 7 | Anschluß |
| 8 | Boden |
| 9 | zweite Rückstellfeder |
| 10 | zweiter Druckraum |
| 11 | radialer Bund |
| 12 | Manschettendichtung |
| 13 | Ausgleichsbohrung |
| 14 | Nachlaufbohrung |
| 15 | Ringraum |
| 16 | ringförmige Ausnehmung |
| 17 | erster Druckraum |
| 18 | zweite Manschettendichtung |
| 19 | Ringnut |
| 20 | erste Rückstellfeder |
| 21 | radialer Bund |
| 22 | Manschettendichtung |
| 23 | Ausgleichsbohrung |
| 24 | Kanal |
| 25 | Ringraum |
| 26 | Stufe |
| 27 | Verjüngung |
| 28 | Dicht- und Sicherungspaket |
| 29 | Fesselungsschraube |
| 30 | Ende |
| 31 | axiale Ausnehmung |
| 32 | Ring |
| 33 | Gegengewinde |
| 34 | radiale Bohrung |
| 35 | herausragendes Ende |
| 36 | zweite axiale Ausnehmung |
| 37 | Distanzscheibe |
| 38 | Druckstück |
| 39 | Angriffspunkt |
| 40 | Anschlagfläche |
| 41 | erstes Zentralventil |
| 42 | zweites Zentralventil |
| 43 | Ventilkörper |
| 44 | Ventilsitz |
| 45 | Fortsatz |
| 46 | Zentralventilfeder |
| 47 | Vorsprung |
| 48 | Stift |
| 49 | Ring |
| 50 | Scheibe |
| 51 | Ventilkörper |
| 52 | Ventilsitz |
| 53 | Zentralventilfeder |
| 54 | Sprengring |
| 55 | Fortsatz |
| 56 | Stift |
| 57 | axiale Ausnehmung |
| 58 | Nut |
| 59 | Kerbe |

**Patentansprüche**

1. Verfahren für die Einstellung einer Kolbenzylinderanordnung, mit einem ersten Kolben (Druckstangenkolben) und einem dem ersten Kolben in Betätigungsrichtung nachgeschalteten zweiten Kolben (Schwimmkolben) sowie mit je einem dem ersten bzw. dem zweiten Kolben zugeordneten Ventil, das einen ersten bzw. zweiten Druckraum in Abhängigkeit von der Bewegung der Kolben von einem drucklosen Ausgleichsbehälter trennt oder mit letzterem verbindet, wobei die beiden Kolben mittels einer Fesselungsschraube aneinander gefesselt sind, und durch je eine Rückstellfeder vorgespannt sind, dabei ist die erste Rückstellfeder stärker als die zweite , und bei dem alle Innenteile ins Zylindergehäuse eingebaut und gesichert werden, sowie nach Abschluß der Einstellung der Ventilschließwege in beiden Kreisen beide Kolben um einen vorherbestimmten Weg zurückgezogen werden und in Abhängigkeit von der Position des Druckstangenkolbens ein oder mehrere Distanzscheiben und/oder Druckstücke zwischen einer Betätigungsstange und dem Druckstangenkolben angeordnet werden, dadurch **gekennzeichnet,** daß die Einstellung der Ventilschließwege folgende Verfahrensschritte umfaßt:

   - Verschieben der beiden Kolben (4,5) soweit, bis das erste Ventil (22,23 bzw. 41) schließt,

- Festhalten des Druckstangenkolbens (4) in der eingestellten axialen Position,
- Verändern des axialen Abstandes zwischen den beiden Kolben (4,5) durch Drehen des Druckstangenkolbens (4), wodurch die aktive Länge der Fesselungsschraube (29) verändert wird, und zwar so lange, bis das zweite Ventil (12,13 bzw. 42) seinen Schließzustand ändert,
- Sicherung der Fesselungsschraube (29) gegen Verdrehen.

2. Verfahren nach Anspruch 1, dadurch **gekennzeichnet,** daß die beiden Druckräume (10,17) mit Druckmedium, insbesondere Druckluft beaufschlagt werden und der Druck in den Druckräumen (10,17) gemessen wird, und daß das Öffnen bzw. Schließen der Ventile (12,13;22,23;41 bzw. 42) durch entsprechende Druckänderungen festgestellt wird.

3. Verfahren nach Anspruch 1 oder 2, dadurch **gekennzeichnet,** daß der Schwimmkolben (5) während der Änderung des axialen Abstandes zwischen den beiden Kolben (4,5) von einem Arretierungsstift gegen Verdrehen gesichert wird.

4. Verfahren nach Anspruch 3, wobei das Zylindergehäuse zwei Anschlüsse für den Ausgleichsbehälter aufweist, die mittels Nachlaufbohrungen mit je einem ständig drucklosen Ringraum verbunden sind, dadurch **gekennzeichnet,** daß der Arretierungsstift durch die dem zweiten Druckraum (15) zugeordnete Nachlaufbohrung (14) in eine Nut (58) des Schwimmkolbens (5) eingeführt wird.

5. Verfahren nach einem der vorhergehenden Ansprüche, dadurch **gekennzeichnet,** daß ein Ende (30) der Fesselungsschraube (29) als Sechskant ausgebildet ist und mit einer axialen Ausnehmung (31) in einem der Kolben (4,5) zusammenwirkt.

6. Verfahren nach einem der Ansprüche 1 bis 4, dadurch **gekennzeichnet,** daß ein Ende (30) der Fesselungsschraube (29) als Vierkant ausgebildet ist und mit einer axialen Ausnehmung (31) in einem der Kolben (4,5) zusammenwirkt.

7. Verfahren nach einem der Ansprüche 1 bis 4, dadurch **gekennzeichnet,** daß ein Ende (30) der Fesselungsschraube (29) als Oval ausgebildet ist und mit einer axialen Ausnehmung (31) in einem der Kolben (4,5) zusammenwirkt.

8. Verfahren nach einem der vorhergehenden Ansprüche, dadurch **gekennzeichnet,** daß mindestens eines der Ventile als Zentralventil (41,42) ausgeführt ist.

9. Verfahren nach Anspruch 3 und 10, wobei das Zentralventil im Schwimmkolben in der Ruhelage zum Öffnen an einem als Stift ausgebildeten Anschlag anliegt, dadurch **gekennzeichnet,** daß der Stift (56) als Arretierungsstift dient.

10. Verfahren nach einem der vorhergehenden Ansprüche, dadurch **gekennzeichnet,** daß der Druckstangenkolben (4) eine Vorrichtung, insbesondere Kerbe (59) aufweist, die sein Verdrehen erleichtert.

# Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 446 005 (TEVES)<br>* Ansprüche 1-4; Figur 1 *<br>– – – | 1 | B 60 T 11/20 |
| Y,A | US-A-3 147 596 (WALLACE)<br>* Figur 1 *<br>– – – | 1,5 | |
| A | DE-A-3 424 513 (TEVES)<br>* Ansprüche 1, 4; Figur 1 *<br>– – – | 1,3 | |
| A | FR-A-2 632 591 (TEVES)<br>– – – – – | | |

| RECHERCHIERTE SACHGEBIETE (Int. Cl.5) |
|---|
| B 60 T |

Der vorliegende Recherchenbericht wurde für alle Patentansprüche erstellt

| Recherchenort | Abschlußdatum der Recherche | Prüfer |
|---|---|---|
| Berlin | 13 September 91 | LUDWIG H J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

---

& : Mitglied der gleichen Patentfamilie, übereinstimmendes Dokument